(19) Europäisches Patentamt
European Patent Office
Office européen des brevets

(11) Numéro de publication : **0 083 521**
**B1**

(12) **FASCICULE DE BREVET EUROPÉEN**

(45) Date de publication du fascicule du brevet : **05.03.86**

(51) Int. Cl.⁴ : **C 08 F 8/50**, C 08 F 6/26, C 08 F210/16

(21) Numéro de dépôt : **82402276.8**

(22) Date de dépôt : **14.12.82**

(54) **Copolymères modifiés de l'éthylène et d'au moins une alpha-oléfine et procédé pour leur préparation.**

(30) Priorité : **24.12.81 FR 8124217**

(43) Date de publication de la demande : **13.07.83 Bulletin 83/28**

(45) Mention de la délivrance du brevet : **05.03.86 Bulletin 86/10**

(84) Etats contractants désignés : **AT BE CH DE FR GB IT LI LU NL SE**

(56) Documents cités :
**DE-A- 1 301 540**
**DE-A- 1 495 285**
**FR-A- 1 386 006**
**FR-A- 2 132 780**
**GB-A- 988 846**
**GB-A- 1 043 082**
**GB-A- 1 919 182**
**US-A- 3 325 442**
**DIE MAKROMOLEKULARE CHEMIE, vol. 157, 24 juillet 1972, pages 279-298, Hüthig & Wepf Verlag, Basel, CH**

(73) Titulaire : **Société Chimique des Charbonnages S.A.**
**Tour Aurore Place des Reflets**
**F-92080 Paris La Défense Cédex 5 (FR)**

(72) Inventeur : **Machon, Jean-Pierre**
**83 rue Delisse-Engrand**
**F-62400 Béthune (FR)**
Inventeur : **Le Brasseur, Geneviève**
**5 rue Debeaumont**
**F-62160 Bully-les-Mines (FR)**
Inventeur : **Hert, Marius**
**21 Chaussée Brunehaut Estrée Cauchy**
**F-62690 Aubigny en Artois (FR)**
Inventeur : **Decroix, Jean-Claude**
**rue de la Forge aux Fers St-Nicolas-lès-Arras**
**F-62000 Arras (FR)**

**EP 0 083 521 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne des copolymères modifiés de l'éthylène et d'au moins une α-oléfine et un procédé pour leur préparation.

Il est connu depuis longtemps que l'on peut polymériser l'éthylène sous très haute pression et à température élevée en présence d'un initiateur de radicaux libres. On obtient de cette façon un polymère connu sous le nom de polyéthylène basse densité radicalaire. Quel que soit son indice de fluidité, ce polymère fait généralement preuve d'une étirabilité passable lors de la confection de gaine tubulaire et d'une médiocre résistance au déchirement. En revanche, il permet d'obtenir une bonne stabilité de la bulle lors de l'extrusion-soufflage et il possède une processabilité excellente ; la processabilité est définie comme d'une part l'absence de rupture prématurée de l'extrudat (« melt fracture ») et d'autre part la puissance consommée lors de l'extrusion.

Des améliorations substantielles à l'étirabilité et à la résistance au déchirement ont été apportées en préparant des copolymères d'éthylène et d'au moins une α-oléfine comme le propylène et le butène-1 en présence d'un système catalytique de type Ziegler. Cependant on constate, lors de leur extrusion-soufflage, une instabilité de la bulle et une tendance spontanée à l'agrandissement des trous en cas de perforation de la bulle. On constate également la rupture prématurée de l'extrudat lors de l'extrusion.

Le brevet français n° 2.132.780 décrit des copolymères éthylène/α-oléfine modifiés par l'action, dans une extrudeuse, d'initiateurs de radicaux libres en des quantités comprises entre 0,005 et 5 % en poids par rapport au polymère à modifier, à une température comprise entre 204 et 345 °C, sous une pression comprise entre 14 et 350 bars.

Les polymères ainsi modifiés ont tous, par rapport au polymère dont ils dérivent, une distribution des masses moléculaires réduite, un indice de fluidité augmenté d'au moins 50 %, une masse moléculaire moyenne diminuée.

Le brevet anglais n° 1.043.082 décrit le mélange intime de copolymères éthylène/α-oléfine avec de 0,001 à 10 % en poids d'un initiateur de radicaux libres, à une température comprise entre 60 et 300 °C, de préférence dans une extrudeuse.

Les brevets allemands n° 1.301.540 et 1.495.285 décrivent le traitement, entre 50 et 250 °C, d'une solution ou suspension de polyoléfine dans un solvant inerte par un initiateur de radicaux libres (0,005 à 20 % en poids par rapport à la polyoléfine) en présence d'un sensibilisateur (sulfite, thiosulfate, hydrazine, mercaptan, etc...). Ce procédé permet d'abaisser la viscosité réduite des polyoléfines de 1-20 à 0,3-5.

Un but de l'invention est d'obtenir des polymères de l'éthylène ayant simultanément, dans l'application à la fabrication de films, d'une part les qualités du polyéthylène basse densité radicalaire à savoir la stabilité de la bulle et la processabilité et d'autre part celles des copolymères obtenus en présence de systèmes catalytiques de type Ziegler à savoir l'étirabilité et la résistance au déchirement.

Un objet de l'invention concerne des copolymères modifiés de l'éthylène et d'au moins une α-oléfine ayant de 3 à 12 atomes de carbone, comprenant de 0,5 à 10 % en moles de motifs dérivés de ladite α-oléfine, caractérisés en ce que leur viscosité limite mesurée est comprise entre 1,5 et 10 fois leur viscosité limite calculée à partir de la distribution des masses moléculaires.

L'α-oléfine peut être choisie notamment parmi le propylène, le butène-1, le pentène-1, l'hexène-1, le méthyl-pentène-1, l'heptène-1, l'octène-1 ou leurs mélanges.

Par viscosité limite mesurée $\eta_0^m$ on entend la valeur de la viscosité à gradient de cisaillement nul obtenue par extrapolation de la courbe de la viscosité mesurée en fonction du gradient de cisaillement. Les mesures sont effectuées à l'aide de tout matériel approprié et en particulier de la balance rhéomètre décrite dans le brevet français n° 1.462.343. Avantageusement les mesures sont effectuées à la température à laquelle est mesuré l'indice de fluidité selon la norme ASTM D 1238-73 c'est-à-dire à 190 °C.

Par viscosité limite calculée $\eta_0^c$ on entend la valeur de la viscosité à gradient de cisaillement nul obtenue par calcul à partir de la distribution des masses moléculaires déterminée par chromatographie par perméation de gel (GPC). La théorie de BUECHE (J. Chem. Phys. 1956 (25) 599) montre qu'un polymère linéaire, s'il est isomoléculaire, obéit à une relation du type $\eta_0 = KM^{3,4}$ ; $\eta_0$ étant la viscosité limite, K un coefficient de proportionnalité dépendant de la température, M la masse moléculaire moyenne. Si le polymère est polydispersé, il faut introduire dans cette relation une masse moyenne rhéologique $M_t$ exprimée, en fonction de $C_i$ la proportion en poids et $M_i$ la masse de chaque fraction du polymère déterminée par GPC, par la relation :

$$M_t = \left( \sum C_i M_i^{1,21} \right)^{\frac{1}{1,21}}$$

A la température de 190 °C, on obtient expérimentalement pour les copolymères d'éthylène et d'α-oléfine la relation :

$$\log \eta_0^c = 3,482 \log M_t - 13,342.$$

Ainsi, quel que soit le copolymère modifié selon l'invention, $\eta_0^c$ est la viscosité limite calculée qu'aurait un copolymère d'éthylène et d'α-oléfine de même masse moléculaire moyenne en nombre ($M_n$), de même masse moléculaire moyenne en poids ($M_w$), de même indice de fluidité (IF) et de même masse volumique (ρ). Le rapport $\eta_0^m/\eta_0^c$ obtenu pour des copolymères non modifiés de l'éthylène et d'α-oléfine est sensiblement égal à 1, aux erreurs expérimentales près.

Le comportement amélioré des copolymères modifiés selon l'invention, lors de l'extrusion-soufflage de films, doit être attribué au fait qu'ils présentent un rapport $\eta_0^m//\eta_0^c$ compris entre 1,5 et 10.

Les copolymères modifiés selon l'invention ont généralement un indice de fluidité compris entre 0,1 et 10 dg/min et une masse volumique comprise entre 0,910 et 0,955 g/cm$^3$. Dans l'application à la fabrication de films tubulaires, c'est-à-dire lorsque leur indice de fluidité ne dépasse pas environ 3 dg/min, ces copolymères modifiés montrent une remarquable processabilité et d'excellentes propriétés, notamment une étirabilité industrielle, définie comme l'épaisseur de film permettant une fabrication continue par extrusion-soufflage pendant une durée de 2 heures sans perturbations, aussi faible que 7 μm (microns). Ils sont entièrement solubles et extractibles par les solvants habituels des polyoléfines.

Un autre objet de l'invention concerne la préparation des copolymères modifiés décrits ci-dessus. Selon une première variante, l'invention a pour objet un procédé continu de préparation des copolymères modifiés par copolymérisation de l'éthylène avec au moins une α-oléfine, dans au moins un réacteur, en présence d'un système catalytique de type Ziegler, à une température de 180 °C à 320 °C et sous une pression de 300 à 2 500 bars, en présence, le cas échéant, de jusqu'à 2 % en moles d'hydrogène, le temps de séjour moyen du système catalytique dans le réacteur étant compris entre 1 et 120 secondes, caractérisé en ce qu'on introduit en fin de réaction de 0,01 à 1 millimole par kg de copolymère d'au moins un initiateur de radicaux libres, à une température comprise entre 220 °C et 320 °C, sous une pression comprise entre 500 et 1 000 bars.

La valeur maximale de la pression est choisie en vue d'éviter la polymérisation du monomère n'ayant pas réagi et donc la formation de polyéthylène basse densité radicalaire.

La copolymérisation est effectuée dans au moins un réacteur comprenant au moins une zone réactionnelle. Le réacteur peut être autoclave ou tubulaire avec plusieurs zones réactionnelles. Il pourra être avantageux d'adopter une disposition particulière de l'installation de polymérisation par exemple l'une de celles décrites dans les brevets français n° 2.346.374 et 2.385.745. L'α-oléfine est soit introduite soit formée par oligomérisation de l'éthylène. La teneur en α-oléfine dans le mélange réactionnel est fonction de la nature de ladite α-oléfine ; elle est avantageusement comprise entre 15 et 35 % en poids pour le propylène, entre 5 et 65 % en poids pour le butène-1, entre 5 et 80 % en poids pour l'hexène-1. Elle n'est pas nécessairement constante le long du réacteur.

Le système catalytique de type Ziegler comprend d'une part au moins un activateur choisi parmi les hydrures et les composés organométalliques des métaux des groupes I à III de la Classification Périodique et d'autre part au moins un composé halogéné d'un métal de transition des groupes IVa à VIa, éventuellement fixé sur un support inerte ou mélangé à un composé d'un métal du groupe VIII.

L'activateur peut être :

— un alkylaluminium, comme le triéthylaluminium, le tributylaluminium, le triisobutylaluminium, le trioctylaluminium,

— un chlorodialkylaluminium comme le chlorodiéthylaluminium,

— un dichloroalkylaluminium comme le dichloroéthylaluminium,

— un alkylsiloxalane de formule

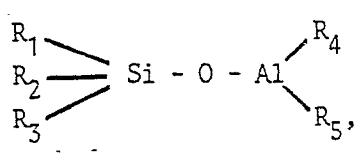

$R_1$, $R_2$, $R_3$, $R_4$ étant des radicaux hydrocarbonés ayant de 1 à 10 atomes de carbone et $R_5$ étant soit un radical hydrocarboné ayant de 1 à 10 atomes de carbone, soit un radical du type

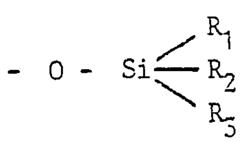

— un composé à base de fluorure d'alkylaluminium et ayant pour formules $(AlR_2F)$ $(AlR_2X)_a$ ou bien $(AlR_2F)$ $(AlR_2H)_b(AlR_3)_c$, dans lesquelles R est un groupe alkyle ayant de 1 à 12 atomes de carbone, X un halogène autre que le fluor, $0,1 \leq a \leq 0,4$, $0,1 \leq b \leq 0,4$ et $0,05 \leq c \leq 0,2$.

Le composé halogéné d'un métal de transition des groupes IVa à VIa, éventuellement fixé sur un support inerte ou mélangé à un composé d'un métal du groupe VIII peut être :

— du chlorure de titane violet $TiCl_3$, 1/3 $AlCl_3$,

— un composé de formule $(TiCl_a)$ $(MgCl_2)_y(AlCl_3)_z(RMgCl)_b$ dans laquelle $2 \leq a \leq 3$, $y \geq 2$, $0 \leq z \leq 1/3$ et $0 \leq b \leq 1$, seul ou en mélange avec un composé de formule $TiCl_3(AlCl_3)_w$ $(E, TiCl_4)_x$ dans laquelle $0 \leq w \leq 1/3$, $0 \leq x \leq 0{,}03$ et E est un éther diisoamylique ou di n-butylique,

— le produit obtenu par mise en contact d'un composé complexe de magnésium comportant au moins un composé choisi parmi les monohalogénures de magnésium et les hydrures d'ahlogénomagnésium, et d'un halogénure de titane ou de vanadium dans lequel le métal a une valence non supérieure à 3,

— un composé de formule $(MX_a)$ $(MgX_2)_b$ $(RMgX)_c$ $(HMgX)_d$, dans laquelle M est un métal du groupe IVa ou Va de la Classification Périodique, X est un halogène, R est un radical hydrocarboné et $2 \leq a \leq 3{,}5$, $1 \leq b \leq 30$, $1 < c \leq 8$ et $0 \leq d \leq 10$,

— un composé de formule $(TiCl_3$, $1/3$ $AlCl_3)$ $(MCl_3)_x$ $(MgX_2)_y$ dans laquelle M est un métal de transition des groupes Va et VIa de la Classification Périodique, X est un halogène, $0{,}3 \leq x \leq 3$ et $0 \leq y \leq 20$,

— un composé formé de cristaux mixtes contenant $TiCl_3$ (ou $TiCl_2$), $AlCl_3$ et d'autres chlorures métalliques tels que $FeCl_2$, $NiCl_2$, $MoCl_3$, $MgCl_2$,

— un composé de formule $(MX_3)$ $(\emptyset_nSiL_{4-n})_b$ dans laquelle M est un métal de transition des groupes IVa à VIa de la Classification Périodique, Ø est un noyau aromatique ou polyaromatique éventuellement substitué ayant de 6 à 15 atomes de carbone, L est soit un atome d'halogène, soit un groupe hydroxyle et $1 \leq n \leq 3$, $0{,}2 \leq b \leq 2$, ledit composé étant le cas échéant associé à $AlCl_3$, $MgCl_2$ et/ou un halogénure de métal du groupe VIII,

— un composé de formule $X_{m-n}M(OR)_n$ dans laquelle M représente un ou plusieurs métaux des groupes Ia, IIa, IIb, IIIb et VIIa de la Classification Périodique, X est un radical inorganique monovalent, R est un radical hydrocarboné monovalent, m est la valence de M et $1 \leq n \leq m$, mis en présence d'un dérivé halogéné d'un métal de transition des groupes IVa à VIa.

Le support inerte sur lequel est déposé le catalyseur Ziegler comprend par exemple un ou plusieurs des composés suivants : $MgCl_2$, $Al_2O_3$, $MoO_3$, $MnCl_2$, $SiO_2$, MgO.

Le procédé selon l'invention peut être mis en œuvre en copolymérisant l'éthylène et l'α-oléfine en présence d'un hydrocarbure saturé tel que le propane, le butane, etc... employé à raison de jusqu'à 50 % en poids, principalement lorsque la température et/ou la pression sont faibles. Afin de contrôler avec précision l'indice de fluidité du copolymère modifié obtenu, il peut aussi être avantageux d'effectuer la copolymérisation en présence de jusqu'à 2 % en moles d'hydrogène.

Selon cette première variante, on intrduit l'initiateur de radicaux libres en fin de réaction. Cette introduction peut être effectuée sous la forme d'une solution ou d'une suspension de l'initiateur de radicaux libres dans la dernière zone réactionnelle du réacteur ou de l'ensemble de réacteurs, ou bien dans le dernier réacteur d'un ensemble de réacteurs branchés en série, étant entendu que la pression dans ladite dernière zone ou dans ledit dernier réacteur est comprise entre 500 et 1 000 bars. Selon cette première variante du procédé selon l'invention, l'initiateur de radicaux libres est choisi avantageusement parmi les composés peroxydiques et le benzopinacol. Un composé peroxydique préféré est le peroxyde de ditertiobutyle.

Selon cette première variante, on introduit l'initiateur de radicaux libres en fin de réaction. Cette objet un procédé consistant, dans une première étape à copolymériser de l'éthylène avec au moins une α-oléfine, dans au moins un réacteur, en présence d'un système catalytique de type Ziegler, à une température de 30 °C à 320 °C et sous une pression de 1 à 2 500 bars, en présence, le cas échéant, de jusqu'à 2 % en moles d'hydrogène, caractérisé en ce que dans une seconde étape on met le copolymère obtenu dans la première étape en présence de 0,01 à 1 millimole par kg de copolymère d'au moins un initiateur de radicaux libres choisi parmi les 2,2'-azo-bis(acyloxyalcanes), à une température comprise entre 220 °C et 320 °C, pendant une durée comprise entre 5 et 200 secondes, dans une machine de transformation.

Ainsi tout copolymère de l'éthylène et d'au moins une α-oléfine ayant de 3 à 12 atomes de carbone peut être modifié selon cette seconde variante ; il peut s'agir d'un copolymère obtenu en phase gazeuse ou en phase liquide ou en solution dans un solvant. A titre de composés du type 2,2'-azo-bis(acyloxyalcanes) on peut utiliser :

— le 2,2'-azo-bis(acétoxybutane)
— le 2,2'-azo-bis(acétoxyisobutane)
— le 2,2'-azo-bis(propionoxypropane).

Avantageusement on utilise le 2,2'-azo-bis(2-acétoxypropane).

La machine de transformation du copolymère est par exemple une extrudeuse ou une boudineuse, alimentée sous une pression comprise entre 1 bar et 25 bars : il est bien connu que la pression dans l'extrudeuse peut atteindre 250 bars en fonction du profil de la vis d'extrusion. La mise en présence de l'initiateur de radicaux libres et du copolymère dans la machine de transformation a lieu avantageusement en utilisant une solution de l'initiateur ou un mélange maître préparé à sec.

Les exemples non limitatifs suivants ont pour but d'illustrer l'invention.

## Exemple 1

Dans un réacteur autoclave cylindrique de volume 3 l divisé en 3 zones à l'aide d'écrans métalliques on copolymérise, sous une pression de 980 bars, un mélange constitué de 60 % en poids d'éthylène et de

40 % en poids de butène-1. Les températures sont de 250 °C dans la première zone, 258 °C dans la seconde et 256 °C dans la troisième zone. Le système catalytique est constitué du catalyseur $TiCl_3$, 1/3 $AlCl_3$, $VCl_3$ activé par le diméthyléthyldiéthylsiloxalane (ci-après activateur A) dans un rapport Al/Ti + V = 3 et est injecté dans les première et seconde zones. On introduit dans la troisième zone 0,065 millimole de peroxyde de ditertiobutyle par kg de copolymère, sous forme d'une solution dans le méthylcyclohexane.

Outre la quantité d'initiateur utilisée en millimole par kg de copolymère, les caractéristiques suivantes du copolymère modifié obtenu (et des copolymères modifiés obtenus selon les exemples suivants) figurent dans le tableau I en annexe.

— taux de motifs dérivés de l'α-oléfine dans le copolymère modifié obtenu, déterminé par spectroscopie infra-rouge, en % en moles

— rendement catalytique en copolymère en kg par milliatome-gramme de titane

— masse volumique ρ en g/cm3

— indice de fluidité IF en dg/min mesuré à 190 °C selon la norme ASTM D 1238-73

— viscosité limité mesurée à 190 °C à l'aide de la balance rhéomètre décrite dans le brevet français n° 1.462.343 et exprimée en poises ($10^{2}$.mPa.s)

— rapport $\eta_0{}^m/\eta_0{}^c$

Exemple 2 (comparatif)

On opère dans les mêmes conditions qu'à l'exemple 1 mais on n'introduit pas de peroxyde dans la troisième zone.

Exemple 3

On copolymérise dans le réacteur de l'exemple 1, dont les zones sont portées respectivement aux températures de 185 °C, 230 °C et 270 °C, sous une pression de 600 bars, un mélange de 70 % en poids d'éthylène et 30 % en poids de butène-1.

On injecte dans les 2 premières zones un système catalytique comprenant le catalyseur $TiCl_3$, 1/3 $AlCl_3$, 2$VCl_3$, activé par l'activateur A dans un rapport Al/Ti + V = 3.

On injecte dans la 3ème zone le même système catalytique auquel on a ajouté 0,031 millimole de benzopinacol par kg de copolymère.

Exemple 4

Dans un appareillage comportant 2 réacteurs agencés en série, le premier réacteur comprenant 3 zones réactionnelles maintenues respectivement aux températures de 200 °C, 225 °C et 185 °C, et sous une pression de 1 200 bars, le second réacteur comprenant 2 zones réactionnelles maintenues respectivement aux températures de 235 °C et 280 °C, et sous une pression de 900 bars, on polymérise de l'éthylène en présence de 6 % en volume de propane. Le système catalytique, identique à celui de l'exemple 1, est injecté dans les première et troisième zones du premier réacteur. Dans la première zone du second réacteur on injecte le catalyseur $TiCl_3$, 1/3$AlCl_3$, 2$VCl_3$, activé par un mélange équimoléculaire de $Al(C_2H_5)_3$ et de $Al(C_2H_5)_2Cl$ dans un rapport Al/Ti = 3.

Dans la seconde zone du second réacteur on injecte 0,2 millimole par kg de copolymère, de peroxyde de ditertiobutyle en solution dans un mélange d'hydrocarbures saturés en $C_{11}$-$C_{12}$.

Les conditions opératoires et le système catalytique utilisé sont tels que l'éthylène se dimérise partiellement en butène-1 qui copolymérise avec lui pour former un copolymère comportant 0,6 % en moles de motifs dérivés du butène-1.

Exemple 5 (comparatif)

Dans le réacteur de l'exemple 1, dont les zones sont maintenues respectivement aux températures de 250 °C, 260 °C et 260 °C, on copolymérise un mélange de 55 % en poids d'éthylène et 45 % en poids de butène-1 sous une pression de 950 bars, en présence de 0,1 % d'hydrogène en volume.

Dans la première et la seconde zones on introduit le catalyseur $TiCl_3$, 1/3$AlCl_3$, 2$VCl_3$ activé par l'activateur A dans un rapport Al/Ti = 3.

Sur une machine du type B 60 de REINFENHAUSER on a extrudé des films tubulaires d'épaisseur 50 μm (microns), à une température de 240 °C et selon un taux de gonflage de 2. Les propriétés suivantes sont mesurées et consignées dans le tableau II.

— résistance au déchirement RD (exprimée en g) dans les sens longitudinal L et transversal T, déterminée selon la norme ASTM D 1922-67

— résistance au fluage déterminée selon la norme NFT 51103

— résistance à l'impact (exprimée en g) mesurée selon la norme ASTM D1709/80

— étirabilité industrielle EI (exprimée en μ)

— trouble T (exprimé en %) mesuré selon la norme E 2421

— énergie consommée W (exprimée en KWh/kg).

Exemple 6

On opére dans les mêmes conditions qu'à l'exemple 5 en introduisant, de plus, dans la 3ème zone réactionnelle 0,1 millimole de peroxyde de ditertiobutyle (en solution dans le méthylcyclohexane) par kg de copolymère fabriqué. On modifie la teneur en hydrogène en la portant à 0,3 % en volume par rapport au mélange d'éthylène et de butène-1 de façon à obtenir un copolymère dont la masse volumique soit identique à celle du copolymère obtenu à l'exemple 5. Le copolymère modifié obtenu est extrudé dans les mêmes conditions qu'à l'exemple 5. Ses propriétés sont consignées au tableau II.

Exemple 7 (comparatif)

On opère dans les mêmes conditions qu'à l'exemple 5 mais en absence d'hydrogène.

Exemple 8

On opère dans les mêmes conditions qu'à l'exemple 5 en présence de 0,15 % en volume d'hydrogène. On injecte dans l'extrudeuse 0,3 millimole de 2,2'-azo-bis(2-acétoxypropane), en solution dans une coupe $C_{12}$-$C_{14}$ d'hydrocarbures saturés, par kg de copolymère. Le copolymère modifié extrudé possède les caractéristiques figurant au tableau I.

Exemple 9

Au copolymère obtenu à l'exemple 5 on ajoute, au moment de son passage en extrudeuse à la température de 240 °C, 0,59 millimole par kg de 2,2'-azo-bis(2-acétoxypropane) en solution dans une coupe $C_{12}$-$C_{14}$ d'hydrocarbures saturés. On obtient un copolymère modifié extrudé dont les caractéristiques figurent au tableau I.

Exemple 10

En injectant dans l'extrudeuse 0,2 millimole de 2,2'-azo-bis(2-acétoxypropane) par kg de copolymère obtenu à l'exemple 5, sous forme d'un mélange maître préparé à sec à base du même copolymère comportant 4 000 ppm de cet initiateur, on obtient le copolymère modifié dont les caractéristiques figurent au tableau I.

Exemple 11

Dans les conditions opératoires décrites à l'exemple 1, on copolymérise un mélange de 75 % en poids d'éthylène et 25 % en poids de butène-1, comprenant en outre 0,4 % en volume d'hydrogène. Le peroxyde de ditertiobutyle en solution dans le méthylcyclohexane est introduit dans la troisième zone du réacteur à raison de 0,1 millimole par kg de copolymère. Les caractéristiques du copolymère ainsi modifié figurent au tableau I.

(Siehe Tabelle I Seite 7 f.)

Tableau I

| Exemple | Initiateur millimole/kg | Motifs $\alpha$-oléfine % en moles | Rendement catalytique | $\rho$ g/cm$^3$ | I.F. dg/min | $\eta_0^m$ poises (id. m.Pa.s) | $\eta_0^m/\eta_0^c$ |
|---|---|---|---|---|---|---|---|
| 1 | 0,065 | 1,8 | 6,5 | 0,930 | 0,85 | 138.000 | 1,6 |
| 2 | — | 1,8 | 7,1 | 0,930 | 2,40 | 34.500 | 0,95 |
| 3 | 0,031 | 3,0 | 5,8 | 0,922 | 1,25 | 173.000 | 1,8 |
| 4 | 0,2 | 0,6 | 7,5 | 0,955 | 1,20 | 96.000 | 2,5 |
| 5 | — | 3,8 | 5,5 | 0,919 | 1,20 | 66.000 | 1,0 |
| 6 | 0,1 | 3,8 | 5,2 | 0,919 | 1,20 | 160.000 | 2,3 |
| 7 | — | 3,8 | 6,2 | 0,919 | 0,70 | 110.000 | 1,05 |
| 8 | 0,3 | 3,8 | 5,7 | 0,919 | 0,70 | 250.000 | 2,3 |
| 9 | 0,59 | 3,8 | 5,5 | 0,919 | 0,45 | 481.000 | 5,9 |
| 10 | 0,2 | 3,8 | 5,5 | 0,919 | 1,0 | 144.000 | 3,0 |
| 11 | 0,1 | 0,9 | 7,2 | 0,940 | 8,0 | 29.000 | 2,2 |

Tableau II

| EXEMPLE | RD L | T | RF | RI | EI | T | W |
|---|---|---|---|---|---|---|---|
| 5 | 350 | 650 | moyenne | 250 | 7 | 5 | 0,380 |
| 6 | 430 | 580 | très bonne | 240 | 7 | 4,5 | 0,335 |

**Revendications**

1. Copolymères modifiés de l'éthylène et d'au moins une α-oléfine ayant de 3 à 12 atomes de carbone, comprenant de 0,5 à 10 % en moles de motifs dérivés de ladite α-oléfine, caractérisés en ce que leur viscosité limite mesurée est comprise entre 1,5 et 10 fois leur viscosité limite calculée à partir de la distribution des masses moléculaires.

2. Copolymères selon la revendication 1, caractérisés en ce que leur indice de fluidité est compris entre 0,1 et 10 dg/min.

3. Procédé continu de préparation des copolymères modifiés selon la revendication 1 par copolymérisation de l'éthylène avec au moins une α-oléfine, dans au moins un réacteur, en présence d'un système catalytique de type Ziegler, à température de 180 °C à 320 °C et sous une pression de 300 à 2 500 bars, en présence, le cas échéant, de jusqu'à 2 % en moles d'hydrogène, le temps de séjour moyen du système catalytique dans le réacteur étant compris entre 1 et 120 secondes, caractérisé en ce qu'on introduit en fin de réaction de 0,01 à 1 millimole par kg de copolymère d'au moins un initiateur de radicaux libres, à une température comprise entre 220 °C et 320 °C, sous une pression comprise entre 500 et 1 000 bars.

4. Procédé selon la revendication 3, caractérisé en ce qu'on introduit l'initiateur de radicaux libres dans la dernière zone réactionnelle du réacteur.

5. Procédé selon la revendication 3, caractérisé en ce qu'on introduit l'initiateur de radicaux libres dans le dernier réacteur d'un ensemble de réacteurs branchés en série.

6. Procédé selon l'une des revendications 3 à 5, caractérisé en ce que l'initiateur de radicaux libres est un composé peroxydique.

7. Procédé selon la revendication 6, caractérisé en ce que le composé peroxydique est le peroxyde de ditertiobutyle.

8. Procédé selon l'une des revendications 3 à 5, caractérisé en ce que l'initiateur de radicaux libres est le benzopinacol.

9. Procédé de préparation des copolymères modifiés selon la revendication 1 consistant, dans une première étape à copolymériser de l'éthylène avec au moins une α-oléfine, dans au moins un réacteur, en présence d'un système catalytique de type Ziegler, à une température de 30 °C à 320 °C et sous une pression de 1 à 2 500 bars, en présence, le cas échéant, de jusqu'à 2 % en moles d'hydrogène, et, dans une seconde étape, à traiter le copolymère obtenu dans la première étape dans une machine de transformation à une température comprise entre 220 °C et 320 °C, caractérisé en ce que dans la seconde étape le copolymère est mis en présence de 0,01 à 1 millimole par kg de copolymère d'au moins un initiateur de radicaux libres choisi parmi les 2,2'-azo-bis(acyloxyalcanes) pendant une durée comprise entre 5 et 200 secondes.

10. Procédé selon la revendication 9, caractérisé en ce que le 2,2'-azo-bis(acyloxyalcane) est le 2,2'-azo-bis(2-acétoxypropane).

**Claims**

1. Modified copolymers of ethylene and of at least one α-olefin having from 3 to 12 carbon atoms, comprising from 0.5 to 10 mol % of units derived from the said α-olefin, characterised in that their measured limiting viscosity is between 1.5 and 10 times their limiting viscosity calculated from the molecular weight distribution.

2. Copolymers according to claim 1, characterised in that their melt index is between 0.1 and 10 dg/min.

3. Continuous process for the preparation of the modified copolymers according to claim 1, by the copolymerisation of ethylene with at least one α-olefin, in at least one reactor, in the presence of a Ziegler-type catalytic system, at a temperature of 180 °C to 320 °C and under a pressure of 300 to 2 500 bars, if appropriate in the presence of up to 2 mol % of hydrogen, the average residence time of the catalytic system in the reactor being between 1 and 120 seconds, characterised in that from 0.01 to 1 millimol, per kg of copolymer, of at least one free-radical initiator, is introduced at the end of the reaction, at a temperature between 220 °C and 320 °C, under a pressure between 500 and 1 000 bars.

4. Process according to claim 3, characterised in that the free-radical initiator is introduced into the last reaction zone of the reactor.

5. Process according to claim 3, characterised in that the free-radical initiator is introduced into the last reactor of a set of reactors branched in series.

6. Process according to one of claims 3 to 5, characterised in that the free-radical initiator is a peroxidic compound.

7. Process according to claim 6, characterised in that the peroxidic compound is ditertiobutyl peroxide.

8. Process according to one of claims 3 to 5, characterised in that the free-radical initiator is benzopinacol.

9. Process for the preparation of the modified copolymers according to claim 1, consisting, in a first step, of copolymerising ethylene with at least one α-olefin, in at least one reactor, in the presence of a Ziegler-type catalytic system, at a temperature of 30 °C to 320 °C and under a pressure of 1 to 2 500 bars, if apropriate in the presence of up to 2 mol % of hydrogen, and, in a second step, of processing the copolymer obtained in the first step in a transformation machine at a temperature between 220 °C and 320 °C, characterised in that, in the second step, the copolymer is brought into contact with 0.01 to 1 millimol, per kg of copolymer, of at least one free-radical initiator selected from the 2,2'-azo-bis (acyloxyalcanes) for a period of 5 to 200 seconds.

10. Process according to claim 9, characterised in that the 2,2'-azo-bis(acyloxyalcane) is 2,2'-azo-bis(2-acetoxypropane).

**Patentansprüche**

1. Modifizierte Copolymere von Äthylen und mindestens einem α-Olefin mit 3 bis 12 Kohlenstoffatomen, welche 0,5 bis 10 Mol.-% an von dem genannten α-Olefin abgeleiteten Einheiten enthalten, dadurch gekennzeichnet, daß ihre gemessene Grenzviskosität zwischen dem 1,5- und 10-fachen ihrer aus der Molekularmassenverteilung berechneten Grenzviskosität beträgt.

2. Copolymere nach Anspruch 1, dadurch gekennzeichnet, daß ihr Fließindex zwischen 0,1 und 10 dg/min beträgt.

3. Kontinuierliches Verfahren zur Herstellung von modifizierten Copolymeren nach Anspruch 1 durch Copolymerisation von Äthylen mit mindestens einem α-Olefin in einem Reaktor in Gegenwart eines Katalysatorsystems des Typs Ziegler, bei einer Temperatur von 180 °C bis 320 °C und unter einem Druck von 300 bis 2 500 bar, gegebenenfalls in Gegenwart von bis zu 2 Mol.-% Wasserstoff, wobei die durchschnittliche Aufenthaltszeit des Katalysatorsystems in dem Reaktor zwischen 1 und 120 s beträgt, dadurch gekennzeichnet, daß man am Ende der Reaktion 0,01 bis 1 Millimol pro kg Copolymer mindestens eines Initiators in Form freier Radikale bei einer Temperatur zwischen 220 °C und 320 °C und unter einem Druck zwischen 500 und 1 000 bar zuführt.

4. Verfahren nach Anspruch 3, dadurch gekennzeichnet, daß man den Initiator in Form freier Radikale in die letzte Reaktionszone des Reaktors einbringt.

5. Verfahren nach Anspruch 3, dadurch gekennzeichnet, daß man den Initiator in Form freier Radikale in den letzten Reaktor einer aus in Serie geschalteten Reaktoren bestehenden Anordnung einbringt.

6. Verfahren nach einem der Ansprüche 3 bis 5, dadurch gekennzeichnet, daß der Initiator in Form freier Radikale eine Peroxidverbindung ist.

7. Verfahren nach Anspruch 6, dadurch gekennzeichnet, daß die Peroxidverbindung Ditertiärbutylperoxid ist.

8. Verfahren nach einem der Ansprüche 3 bis 5, dadurch gekennzeichnet, daß der Initiator in Form freier Radikale Benzopinakol ist.

9. Verfahren zur Herstellung von modifizierten Copolymeren nach Anspruch 1, welches darin besteht, daß in einer ersten Stufe Äthylen mit mindestens einem α-Olefin in mindestens einem Reaktor in Gegenwart eines Katalysatorsystems des Typs Ziegler bei einer Temperatur von 30 °C bis 320 °C und unter einem Druck von 1 bis 2 500 bar und gegebenenfalls in Gegenwart von bis zu 2 Mol.-% Wasserstoff copolymerisiert wird, und in einer zweiten Stufe das in der ersten Stufe erhaltene Copolymer in einer Transformationsvorrichtung bei einer Temperatur zwischen 220 °C und 320 °C behandelt wird, dadurch gekennzeichnet, daß in der zweiten Stufe das Copolymer für eine zwischen 5 und 200 s betragende Dauer mit 0,01 bis 1 Millimol pro kg Copolymer mindestens eines Initiators in Form freier Radikale zusammengebracht wird, der ausgewählt ist aus den 2,2'-azo-bis(acyloxyalkanen).

10. Verfahren nach Anspruch 9, dadurch gekennzeichnet, daß das 2,2'-azo-bis(acyloxyalkan) 2,2'-azo-bis(2-acetoxypropan) ist.